# EUROPEAN PATENT SPECIFICATION

(11) **EP 1 219 402 B1**
(45) Date of publication and mention of the grant of the patent: **27.07.2005**
(21) Application number: 01310895.6
(22) Date of filing: 27.12.2001
(51) Int. Cl.: B29C 45/26, B29C 45/37, G11B 23/40, B29C 43/02

(54) **Indelible watermark on optical discs**
Unlöschbare Markierung auf optischen Platten
Marque indélébile sur disques optiques

(30) Priority: 27.12.2000 US 258462; 28.11.2001 US 996315
(43) Date of publication of application: 03.07.2002
(73) Proprietor: Wea Manufacturing Inc., Olyphant, Pennsylvania 18448 (US)
(72) Inventor: Dallaverde, Dominick, Wilkes-Barre, Pennsylvania 18705 (US)
(74) Representative: Jones, David Colin

(56) References cited:
- JP-A- 8 055 370
- US-A- 5 398 231
- US-A- 5 452 282
- PATENT ABSTRACTS OF JAPAN vol. 1999, no. 11, 30 September 1999 (1999-09-30) & JP 11 149673 A (VICTOR CO OF JAPAN LTD), 2 June 1999 (1999-06-02)
- PATENT ABSTRACTS OF JAPAN vol. 1997, no. 01, 31 January 1997 (1997-01-31) & JP 08 229994 A (TEIJIN LTD), 10 September 1996 (1996-09-10)
- PATENT ABSTRACTS OF JAPAN vol. 014, no. 373 (M-1009), 13 August 1990 (1990-08-13) & JP 02 134219 A (SEKISUI CHEM CO LTD), 23 May 1990 (1990-05-23)

## Description

### Background of the Invention

This invention relates to information-recording media in the form of light-readable disks, and more particularly to providing indelible marking on such information-recording media for identification and verification of authenticity.

Light-readable information-bearing disks are well known, as disclosed in US-A-5068846, US-A-5995481, and US-A-5729533. Commercially available digital video discs ("DVDs"), compact discs ("CDs"), and compact disc read-only memories ("CD-ROMs") exemplify recording media of this general type.

Light-readable information-bearing disks typically comprise a transparent plastic disk-shaped substrate, one surface of which comprises sequences of depressions ("pits") and intermediate areas ("lands"). These pits and lands are arranged in accordance with the information intended to be read by means of optical radiation. The patterned side of the plastic substrate may be covered with a reflective coating, conforming to the local changes in the surface. Light (typically last light) directed toward the pattern is reflected differently depending on whether the light strikes a high or a low spot. In this way, the light reads the information recorded by the pattern of pits and lands. This information can be processed and played back.

The manufacturing of optical disks is also well known in the art. Conventionally, the process begins with cleaning and polishing one surface of a glass plate. The surface is then covered with a uniform thin layer of photoresistive material. After the photoresistive material is cured, a pattern representing digital data is recorded in the photoresistive layer using a modulated high-energy laser beam. The pattern is subsequently developed and the extra material is removed, leaving a photoresistive coating on the surface of the glass, which comprises a pattern of pits and lands representing the digital data.

Next, the photoresistive coating on the glass plate is covered with a nickel layer, thus creating a "master". The master is electroplated with nickel to provide a mating form, referred to as a "father". The father is also plated with nickel to build a negative image in the form of the original master, referred to as a "mother". The mother disk is then used to form "production stampers" for molding the optical disks.

One process of injection molding of optical disks is described in EP-A-1 149 681. According to the method described in this publication, polycarbonate plastic material is injection molded against a production stamper and, when removed from the injection molding machine, has the shape of a substrate having on one surface pits and lands in the pattern representing the digital data.

With the widespread use of light-readable information-bearing disks, disc manufacturers have been increasingly concerned about counterfeit discs. To address this concern, various complicated security systems have been developed. (E.g., US-A-5719937 and EP 0 671 730).

In the past, marks have been applied to light-readable information-bearing discs through the use of production stampers having the topological features representing graphical or other images on the same side of the stampers as the pits and lands representing digital data. US-A-5346654, US-A-5452282, US-A-5946286, and US-A-5398231). The prior art methods are complicated, time-consuming, and require the use of expensive equipment, such as laser beam recorders. Accordingly, it is desirable to provide simple cost-effective solutions for marking discs, so that authentic discs would be readily distinguishable from counterfeit discs.

JP-A-11149673 discloses a process for producing an information recording carrier capable of identifying watermarks by the reproduction of disks by injection molding. The rear surface of a stamper used for forming a signal surface on a substrate is provided with fine differences in level of the specific invisible patterns.

US-A-5398231 discloses an optical information recording substrate having a legible matter formed in a groove area thereof or a pit array area thereof, wherein the legible matter includes a plurality of grooves or pit arrays being partially different in the breadth or depth thereof.

JP-A-08055370 discloses a method of manufacturing an optical disk in which a photoresist layer is formed on a master disk, information is exposed and recorded onto the photoresist layer, which layer is subsequently developed. A stamper is then manufactured from the developed master disk and a replica is moulded from the stamper. The method is such that a stepped section of an optional pattern such as a picture or characters is formed on the surface opposite to the data bit forming surface of the stamper.

In view of the foregoing, it is an object of this invention to provide indelible marks on information-recording media for identification and verification of authenticity of such media.

### Summary of the Invention

In accordance with the present invention, there is provided a method of making an information-recording medium having an indelible watermark comprising the steps of:
providing a mark on a back surface of a stamper using diamond-scribing, wherein said back surface of said stamper is opposite to a front surface, said front surface comprising a pattern of pits and lands; and
forming a substantially transparent disc using said stamper, said disc having a first substantially planar surface and a second surface opposite to said first surface, wherein said forming comprises the steps of:
   transferring both of said pattern of pits and lands from said front surface of said stamper to said second surface of said disc and said mark from said back surface of said stamper, as an indelible watermark, to said second surface of said disc in a high pressure molding process, wherein said indelible watermark is visible under normal light conditions.

Thus, the invention can provide a method of manufacturing light-readable information-recording media, wherein the back of a production stamper is laser-scribed, etched, or marked by other means. The marked production stamper is then used to form a substantially transparent substrate having information recorded on it in the form of pits and lands. The formation of the substrate may be accomplished by a standard replication process. During the replication, the mark is transferred from the back of the stamper to the surface of the substrate, thus creating an indelible watermark.

The resulting watermark is visible under normal light conditions and may be machine readable. Also, because the image is molded into the optical media, it is irreversible and permanent. This watermark image, for example, may comprise the manufacturer's logo or any other indica that uniquely identify the disc, thereby distinguishing it from any counterfeit discs.

### Brief Description of the Drawings

FIG. 1 is a simplified partial and enlarged cross-sectional view of an illustrative structure used in accordance with the principles of this invention.
FIG. 2 is a top view of an illustrative light-readable information-bearing disc in accordance with the principles of this invention.

### Detailed Description of the Preferred Embodiments

The present invention may be used with typical manufacturing equipment for the production of optical discs by the stamper-injection molding process or a variation thereof.

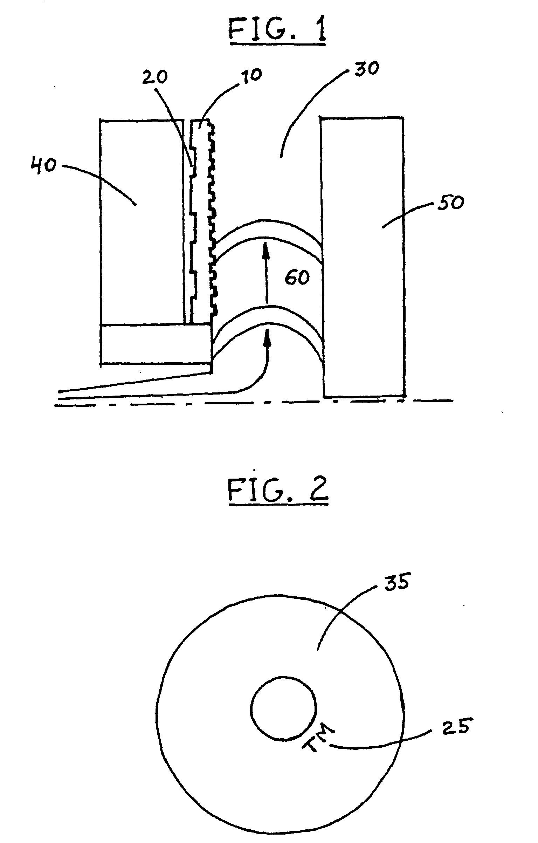

FIG. 1 shows a simplified partial cross-sectional view of a typical injection mold, which includes a cavity 30, a top plate 40, a stamper 10, and a bottom plate 50. In accordance with the principles of the present invention, the back of the metal stamper 10 is marked (preferably laser-scribed, but also may be diamond-scribed, etched, applied using a mechanical tool, etc.) before sanding. Alternatively, the mark can be deposited on the stamper after the stamper has been sanded.
As shown in FIG. 1, the illustrative stamper 10 made in accordance with this invention bears markings 20 (enlarged for illustrative purposes) corresponding to a desired watermark image. The image may comprise any indicia, for example, pictures or graphical images, trademarks, symbols, words, numbers, or any combination thereof.

A moldable material, such as a polycarbonate-based thermoplastic, is liquified by heating to a temperature sufficient to permit uniform flow into the mold cavity. Molten material 60 is then injected into the cavity 30 at high pressure, causing the molten material 60 to conform to the contours of the stamper 10, thereby producing a substrate comprising pits and lands. In accordance with the principles of the present invention, during the process of molding, markings 20 on the back of the stamper 10 are transferred, as a watermark, to the information-carrying side of the optical disc substrate. FIG. 2 shows an illustrative optical disc 35 according to the present invention, bearing a watermark image 25, corresponding to the markings 20 on the metal stamper 10, that is visible under normal light conditions.

It will be understood that FIG. 1 is only illustrative of the present invention and that various modifications can be made by those skilled in the art without departing from the scope of the invention. For example, the present invention is also suitable for use in systems using injection-compression molding or compression molding.

Dimensions of the mark, which is laser-scribed, etched, or deposited on a stamper, are chosen so that the mark is effectively transferred to and is visible on the resulting light-readable information-carrying media without disrupting the play-back of information recorded by means of pits and lands.

Those of ordinary skill in the art may vary the dimensions of markings on the back of a production stamper depending on system parameters, such as the material and thickness of the stamper, the pressure in the mold cavity, and the desired dimensions of the resulting watermark. If the mark is applied to the production stamper using a laser-scriber, the dimensions of the mark can be varied by changing the power of the laser.

The watermark image may be placed anywhere on the optical disc. For example, the watermark may either be superimposed onto the digital data recorded by means of pits and lands or be formed on the periphery of the data-containing region. In the first case, the watermark will not affect playability, if the surface variations due to the presence of the watermark do not exceed the depth of focus of the system used to read the data. On the other hand, if the mark is large enough to cause disruption of play-back, the lost data can be reconstructed by error-correction. When the watermark is formed on the periphery of the information-containing region, the constraints on the dimensions of the watermark are less strict. In this case, however, the area available for the placement of the watermark is smaller.

The transferred watermark image on disc replicas is visible under normal light conditions, so that authentic discs can be readily distinguished from counterfeit discs. Such watermarks may be designed to be machine-readable. Also, because the image is molded into the optical media, it is irreversible and permanent. Further, since only the back of the metal stamper needs to be marked for the image to be reproduced in all discs manufactured using this stamper, the solution in accordance with the principles of this invention provides a cost-effective way of marking a number of discs.

One skilled in the art will appreciate that this invention can be practiced using other than the described embodiments, which are presented for purposes of illustration and not of limitation. This invention is therefore limited only by the claims which follow.

## Claims

1. A method of making an information-recording medium (35) having an indelible watermark (25) comprising the steps of:
providing a mark (20) on a back surface of a stamper (10) using diamond-scribing, wherein said back surface of said stamper (10) is opposite to a front surface, said front surface comprising a pattern of pits and lands; and
forming a substantially transparent disc (35) using said stamper (10), said disc (35) having a first substantially planar surface and a second surface opposite to said first surface, wherein said forming comprises the steps of:
transferring both of said pattern of pits and lands from said front surface of said stamper (10) to said second surface of said disc (35) and said mark (25) from said back surface of said stamper (10), as an indelible watermark, to said second surface of said disc (35) in a high pressure molding process, wherein said indelible watermark (25) is visible under normal light conditions.

2. The method of claim 1 wherein said molding process comprises injection molding.

3. The method of claim 1 wherein said molding process comprises injection-compression molding.

4. The method of claim 1 wherein said molding process comprises compression molding.

5. The method of claim 1 wherein said providing comprises use of a mechanical tool.

6. The method of claim 1 further comprising sanding the back of the stamper (10) after said providing.

7. The method of claim 1 wherein said providing comprises depositing said mark (25) subsequent to sanding the back of said stamper (10).

8. The method of claim 1 wherein said transferring comprises transferring said mark (25) to a region of said second surface of said disc (35) that is free from said pattern of pits and lands.

9. The method of claim 1 wherein said indelible watermark (25) is provided as lettering.

10. The method of claim 1 wherein said indelible watermark (25) is provided as a graphical image.

11. The method of claim 1 wherein said indelible watermark (25) is arranged to be machine readable.

12. The method of claim 1 wherein said indelible watermark (25) is provided as a trademark.

## Patentansprüche

1. Verfahren zur Herstellung eines Informationsaufzeichnungsmediums (35), das ein unlöschbares Wasserzeichen (25) aufweist, umfassend die Schritte:
Bereitstellen einer Markierung (20) auf einer Rückseite eines Stempels (10), wobei ein Diamantschreiben eingesetzt wird und wobei die Rückseite des Stempels (10) entgegengesetzt zu einer Vorderseite angeordnet ist, die ein Muster von Vertiefungen - "pits" - und Zwischenräumen - "lands" - aufweist, und
Formen einer im Wesentlichen transparenten Scheibe (35) unter Verwendung des Stempels (10), wobei die Scheibe (35) eine erste im Wesentlichen ebene Oberfläche und eine zweite, der ersten Oberfläche entgegengesetzte Oberfläche aufweist, wobei das Formen die folgenden Schritte umfasst:
Übertragen sowohl des Musters aus Vertiefungen und Zwischenräumen von der Vorderseite des Stempels (10) auf die zweite Oberfläche der Scheibe (35) als auch der Markierung (25) von der Rückseite des Stempels (10) als ein unlöschbares Wasserzeichen auf die zweite Oberfläche der Scheibe (35) in einem Hochdruckformverfahren, wobei das unlöschbare Wasserzeichen (25) bei normalen Lichtverhältnissen sichtbar ist.

2. Verfahren nach Anspruch 1, wobei das Formverfahren ein Spritzgießen umfasst.

3. Verfahren nach Anspruch 1, wobei das Formverfahren ein Spritzgieß-Formpressen umfasst.

4. Verfahren nach Anspruch 1, wobei das Formverfahren ein Formpressen umfasst.

5. Verfahren nach Anspruch 1, wobei das Bereitstellen die Verwendung eines mechanischen Werkzeugs umfasst.

6. Verfahren nach Anspruch 1, weiter umfassend das Schleifen der Rückseite des Stempels (10) nach dem Bereitstellen.

7. Verfahren nach Anspruch 1, wobei das Bereitstellen das Anbringen der Markierung (25) nach dem Schleifen der Rückseite des Stempels (10) umfasst.

8. Verfahren nach Anspruch 1, wobei das Übertragen das Übertragen der Markierung (25) auf einen Bereich der zweiten Oberfläche der Scheibe (35) umfasst, der frei von dem Muster aus Vertiefungen und Zwischenräumen ist.

9. Verfahren nach Anspruch 1, wobei das unlöschbare Wasserzeichen (25) in Form einer Beschriftung bereitgestellt wird.

10. Verfahren nach Anspruch 1, wobei das unlöschbare Wasserzeichen (25) in Form einer graphischen Abbildung bereitgestellt wird.

11. Verfahren nach Anspruch 1, wobei das unlöschbare Wasserzeichen (25) maschinell lesbar ausgestaltet wird.

12. Verfahren nach Anspruch 1, wobei das unlöschbare Wasserzeichen (25) in Form einer Marke bereitgestellt wird.

## Revendications

1. Procédé de fabrication d'un support d'enregistrement d'informations (35) ayant un filigrane indélébile (25), comprenant les étapes consistant à :
réaliser une marque (20) sur une surface arrière d'une matrice (10) par traçage au diamant, dans lequel ladite surface arrière de ladite matrice (10) est opposée à une surface avant, ladite surface avant comprenant un motif de cuvettes et méplats ; et
former un disque sensiblement transparent (35) en utilisant ladite matrice (10), ledit disque (35) ayant une première surface sensiblement plane et une seconde surface opposée à ladite première surface, cette étape de formation comprenant les étapes consistant à :
transférer, à la fois, ledit motif de cuvettes et méplats, de ladite surface avant de ladite matrice (10) sur ladite seconde surface dudit disque (35), et ladite marque (25), de ladite surface arrière de ladite matrice (10), sous la forme d'un filigrane indélébile, sur ladite seconde surface dudit disque (35) suivant une opération de moulage haute pression, dans lequel ledit filigrane indélébile (25) est visible dans des conditions d'éclairage normal.

2. Procédé selon la revendication 1, dans lequel ladite opération de moulage comprend le moulage par injection.

3. Procédé selon la revendication 1, dans lequel ladite opération de moulage comprend le moulage par injection-compression.

4. Procédé selon la revendication 1, dans lequel ladite opération de moulage comprend le moulage par compression.

5. Procédé selon la revendication 1, dans lequel ladite étape de réalisation comprend l'utilisation d'un outil mécanique.

6. Procédé selon la revendication 1, comprenant en outre l'étape de sablage de l'arrière de la matrice (10) après ladite étape de réalisation.

7. Procédé selon la revendication 1, dans lequel ladite étape de réalisation comprend le dépôt dudit filigrane (25) suite au sablage de l'arrière de ladite matrice (10).

8. Procédé selon la revendication 1, dans lequel ladite étape de transfert comprend le transfert dudit filigrane (25) vers une zone de ladite seconde surface dudit disque (35) qui est exempte dudit motif de cuvettes et méplats.

9. Procédé selon la revendication 1, dans lequel ledit filigrane indélébile (25) est prévu sous la forme d'un lettrage.

10. Procédé selon la revendication 1, dans lequel ledit filigrane indélébile (25) est prévu sous la forme d'une image graphique.

11. Procédé selon la revendication 1, dans lequel ledit filigrane indélébile (25) est conçu pour être lisible par une machine.

12. Procédé selon la revendication 1, dans lequel ledit filigrane indélébile (25) est prévu sous la forme d'une marque de commerce.
